# EUROPÄISCHE PATENTSCHRIFT

(11) **EP 3 377 359 B1**
(45) Veröffentlichungstag und Bekanntmachung des Hinweises auf die Patenterteilung: **12.06.2019**
(21) Anmeldenummer: 16770752.0
(22) Anmeldetag: 23.09.2016
(51) Int. Cl.: B60K 37/06, G06F 3/01, G01S 13/00

(54) **KRAFTFAHRZEUG MIT ZUMINDEST EINER RADAREINHEIT**
MOTOR VEHICLE WITH AT LEAST ONE RADAR UNIT
VÉHICULE AUTOMOBILE MUNI D'AU MOINS UNE UNITÉ RADAR

(30) Priorität: 20.11.2015 DE 102015015067
(43) Veröffentlichungstag der Anmeldung: 26.09.2018
(73) Patentinhaber: Audi AG, 85045 Ingolstadt (DE)
(72) Erfinder: MÜLLER, Ulrich, 85055 Ingolstadt (DE); SCHLITTENBAUER, Michael, 85049 Ingolstadt (DE)
(86) Internationale Anmeldenummer: PCT/EP2016/072699
(87) Internationale Veröffentlichungsnummer: WO 2017/084793

(56) Entgegenhaltungen:
- WO-A1-2016/176574
- DE-A1-102011 075 725
- DE-A1-102013 211 335
- US-A1- 2011 181 509
- US-A1- 2012 280 900

## Beschreibung

Die Erfindung betrifft ein Kraftfahrzeug mit zumindest einer Radareinheit zum Abstrahlen eines Radarsignals und zum Empfangen einer Reflexion des Radarsignals.

Aus dem Stand der Technik ist bekannt, mit einer Radareinheit von einem Kraftfahrzeug aus Gegenstände in einer Umgebung des Kraftfahrzeugs zu detektieren. Hierzu müssen diese Gegenstände aus Metall sein, um über die verhältnismäßig großen Distanzen hinweg noch eine detektierbare Reflexion des abgestrahlten Signals zu erhalten.

Für eine Nahfelddetektion in unmittelbarer Umgebung des Kraftfahrzeugs ist bekannt, Ultraschallsensoren zu verwenden. Hiermit können auch nicht-metallische Gegenstände detektiert werden, z.B. Körper von Personen.

Um im Inneren eines Kraftfahrzeugs Personen berührungslos zu sensieren, kann eine Kamera verwendet werden. Wenn es um die Betätigung von Bedieneinrichtungen geht, kann eine berührungslose Bedienung mittels kapazitiver Sensoren oder Infrarotsensoren realisiert sein. Auch eine kamerabasierte Gestenerkennung kann im Kraftfahrzeug für das Erkennen einer Betätigung eines Bedienelements genutzt werden.

DE102011075725A1 offenbart den Oberbegriff des Patentanspruchs 1.

Der Erfindung liegt die Aufgabe zugrunde, in einem Fahrgastraum eines Kraftfahrzeugs eine Person oder zumindest ein Körperteil einer Person zu detektieren, um hierdurch beispielsweise eine berührungslose Betätigung einer Bedienvorrichtung zu ermöglichen.

Die Aufgabe wird durch das Kraftfahrzeug gemäß Patentanspruch 1 gelöst. Vorteilhafte Weiterbildungen des erfindungsgemäßen Kraftfahrzeugs ergeben sich durch die abhängigen Ansprüche, die folgende Beschreibung sowie die Figuren.

Bei dem erfindungsgemäßen Kraftfahrzeug ist zumindest eine Radareinheit zum Abstrahlen eines Radarsignals und zum Empfangen einer Reflexion des abgestrahlten Radarsignals bereitgestellt. Die Reflexion stellt also das Radarsignal dar, nachdem es an einem Radar-reflektierenden Element zur Radareinheit zurückgeworfen worden ist. Erfindungsgemäß ist nun vorgesehen, die zumindest eine Radareinheit im Fahrgastraum des Kraftfahrzeugs zu nutzen. Hierzu ist vorgesehen, dass ein jeweiliger Erfassungsbereich der zumindest einen Radareinheit in den Fahrgastraum hinein ausgerichtet ist und eine Steuereinrichtung dazu eingerichtet ist, anhand der von der zumindest einen Radareinheit jeweils empfangenen Reflexion in dem Fahrgastraum eine Position eines Körperteils einer Person und/oder eine Bewegung des Körperteils zu erfassen. Mittels einer Radareinheit kann eine relative Lage oder Position des Körperteils bezüglich der jeweiligen Radareinheit und/oder eine Bewegungsgeschwindigkeit erfasst werden.

Durch das erfindungsgemäße Kraftfahrzeug ergibt sich der Vorteil, dass im Fahrgastraum eine Radar-basierte Gestenerkennung realisiert werden kann. Hierbei liegt der Erfindung die Erkenntnis zugrunde, dass bei einem Abstand zwischen Radareinheit und Körperteil, wie er sich in einem Fahrgastraum eines Kraftfahrzeugs ergibt, auch nicht-metallische Gegenstände eine ausreichend starke Reflexion erzeugen, um diese mittels einer Radareinheit detektieren und mit dieser auf die Position des Körperteils und/oder die Bewegung des Körperteils schließen zu können.

Zu der Erfindung gehören auch optionale Weiterbildungen, durch deren Merkmale sich zusätzliche Vorteile ergeben.

Gemäß einer Weiterbildung ist die zumindest eine Radareinheit dazu eingerichtet, ihr Radarsignal mit einem Frequenzverlauf und/oder einem Amplitudenverlauf zu erzeugen, durch welchen die Reflexion durch eine Körperflüssigkeit des Körperteils bewirkt wird. Mit anderen Worten kann beispielsweise die Haut einer Hand ausreichen, um die Reflexion zu erzeugen. Hierdurch ergibt sich der Vorteil, dass bei der Bedienung des Kraftfahrzeugs keine Reflexionshilfen nötig sind, um ein ausreichend starkes, reflektiertes Radarsignal zu erzeugen. Mit Frequenzverlauf ist hierbei gemeint, dass der absolute Wert der Frequenz und/oder eine Änderung des Frequenzwerts über der Zeit eingestellt wird. Entsprechend ist mit Amplitudenverlauf gemeint, dass bei gegebener Frequenz der absolute Wert der Amplitude eingestellt wird und/oder der absolute Wert der Amplitude über der Zeit verändert wird. Geeignete Radarsignale mit einem entsprechenden Frequenzverlauf und/oder Amplitudenverlauf, die innerhalb eines Fahrgastraums auch durch die Körperflüssigkeit eines Körperteils ausreichend stark reflektiert werden, lassen sich mit einfachen Versuchen durch den Fachmann ermitteln.

Gemäß einer Weiterbildung ist die jeweilige Reichweite der zumindest einen Radareinheit kleiner als 50 Zentimeter, insbesondere kleiner als 30 Zentimeter. Mit anderen Worten wird das Körperteil nur in einem Teilbereich des Fahrgastraums erfasst. Insbesondere ist mit dieser Weiterbildung eine berührungslose Betätigung einer Bedienvorrichtung möglich, ohne dass willkürliche Bewegungen im übrigen Teil des Fahrgastraums ebenfalls als Bedienwunsch fehl interpretiert werden.

Erfindungsgemäß weist das Kraftfahrzeug eine Anzeigeeinrichtung zum Anzeigen eines graphischen Bedienelements auf einer Anzeigefläche auf. Die Anzeigeeinrichtung kann beispielsweise ein Bildschirm, wie etwa ein TFT-Bildschirm (TFT - Thin Film Transistor - Dünnschichttransistor) oder OLED-Bildschirm (OLED - Organic Light Emitting Diode) sein. Das graphische Bedienelement kann beispielsweise Bestandteil einer graphischen Benutzerschnittstelle (GUI - Graphical User Interface) sein. Die besagte Steuereinrichtung ist dazu eingerichtet, einen von dem Bedienelement angezeigten Stellwert in Abhängigkeit von der erfassten Position und/oder der erfassten Bewegung einzustellen. Falls es sich bei dem Bedienelement beispielsweise um einen Positionszeiger (Mauszeiger oder Menüauswahlelement) handelt, kann so mit dem Körperteil berührungslos eine Position des Positionszeigers festgelegt werden. Bei dem Bedienelement kann es sich auch beispielsweise um einen Slider handeln, der dann mit einer berührungslosen translatorischen Bewegung des Körperteils eingestellt oder verschoben werden kann.

Eine Weiterbildung sieht vor, dass die besagte Bewegung eine Relativbewegung zumindest zweier Glieder des Körperteils umfasst. Bei dem Körperteil kann es sich beispielsweise um eine Hand handeln, wobei dann als Relativbewegung der Glieder die Relativbewegung zumindest zweier Finger erfasst wird. Die Steuereinrichtung ist dazu ausgelegt, den besagten Stellwert des Bedienelements in Abhängigkeit von der Relativbewegung einzustellen. Hierdurch ergibt sich der Vorteil, dass keine absolute Ausgangsposition des Körperteils zum Einstellen des Stellwerts nötig ist. Ein Benutzer kann also das Körperteil, beispielsweise seine Hand, an einer beliebigen Position im Erfassungsbereich der zumindest einen Radareinheit anordnen. Die Einstellung des Stellwerts wird hierbei nicht beeinflusst. Erst durch das Erzeugen der Relativbewegung der zumindest zwei Glieder des Körperteils wird dann der Stellwert verändert.

Eine Weiterbildung hierzu sieht vor, dass das Bedienelement ein Drehsteller ist. Der Stellwert des Drehstellers ist dann beispielsweise die Drehlage des Drehstellers oder der von dem Drehsteller angezeigte Wert. Die Steuereinrichtung ist dazu eingerichtet, als Relativbewegung eine Reibbewegung zweier Finger zu erfassen. Der Benutzer kann also beispielsweise mit dem Daumen über den Zeigefinger reiben und hierdurch den Drehsteller verstellen oder einstellen. Dies entspricht einer Bewegung, wie sie die Finger durchführen, wenn ein manueller Drehsteller zwischen den Fingern gedreht wird. Diese Weiterbildung weist den besonderen Vorteil auf, dass eine berührungslose Einstellung eines Drehstellers ermöglicht ist, ohne dass hierzu eine Kreisbewegung mit dem Körperteil oder den Gliedern ausgeführt werden muss, was sich von einem Menschen nur schwer im freien Raum koordinieren lässt. Auch auf einem Touchscreen stellt das Einstellen eines Drehstellers in der Regel ein Problem dar, da sich eine Kreisbahn auf einer glatten Bildschirmoberfläche nur mit erhöhtem Koordinationsaufwand exakt einstellen lässt.

Eine Weiterbildung ermöglicht es, den eingestellten Wert zu quittieren, damit anschließend das Körperteil bewegt werden kann, ohne dass es zu einer Verstellung des eingestellten Stellwerts kommt. Diese Weiterbildung sieht vor, dass die Bewegung ein Zusammenführen und/oder Auseinanderbewegen zweier Finger umfasst und die Steuereinrichtung dazu eingerichtet ist, bei Erkennen dieser Bewegung den Stellwert zu quittieren. Danach ist also die Einstellmöglichkeit des Bedienelements blockiert oder beendet.

Die Erfindung sieht vor, dass vom Fahrgastraum aus gesehen von der zumindest einen Radareinheit zumindest eine derart hinter der Anzeigefläche der Anzeigeeinrichtung angeordnet ist, dass ihr Erfassungsbereich die Anzeigefläche durchdringt. Mit anderen Worten strahlt diese Radareinheit das Radarsignal durch die Anzeigefläche hindurch in den Fahrgastraum ab. Hierdurch ergibt sich der Vorteil, dass eine Bedienung eines Bedienelements ermöglicht ist, das in einem mittigen Bereich der Anzeigefläche angezeigt wird, also z.B. im inneren Drittel. Dies setzt voraus, dass die elektrisch leitfähigen Elementen in der Anzeigefläche, also beispielsweise die Transistoren eines TFT-Bildschirms sowie die entsprechenden elektrischen Zuleitungen, keine störenden Reflexionen verursachen. Dies kann durch einfache Versuche ermittelt werden.

Eine Weiterbildung sieht vor, dass vom Fahrgastraum aus gesehen von der zumindest einen Radareinheit zumindest eine derart neben der Anzeigefläche der Anzeigeeinrichtung angeordnet ist, dass ihr Erfassungsbereich an der Anzeigefläche vorbei ausgerichtet ist. Insbesondere schneidet die Abstrahlrichtung mit der größten Strahlungsintensität nicht die Anzeigefläche. Hierdurch können die beschriebenen störenden Reflexionen verhindert werden. Des Weiteren ist hierdurch eine Bedienung von Bedienelementen ermöglicht, ohne dass hierbei der Fahrer sich den Blick auf das Bedienelement durch sein eigenes Körperteil versperrt.

Eine Weiterbildung betrifft das Verkleiden oder Kaschieren der zumindest einen Radareinheit. Bei dieser Weiterbildung ist vorgesehen, dass zwischen der zumindest einen Radareinheit und dem Fahrgastraum ein Verkleidungsteil aus Glas angeordnet ist. Das Glas kann gefärbt sein oder mit einer opaken Schicht beschichtet sein. Glas weist den Vorteil auf, dass es elektrisch nicht-leitend ist und hierdurch das Radarsignal nicht stört. Dennoch kann eine stabile Oberfläche eines Verkleidungsteils bereitgestellt werden.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Anordnung aus einem Radarsensor und einer Anzeigeeinrichtung, wie sie in dem Kraftfahrzeug von Fig. 1 bereitgestellt sein kann;
- Fig. 3: eine Skizze zur Veranschaulichung einer Bediengeste zur Quittierung einer Eingabe;
- Fig. 4: eine schematische Darstellung eines Querschnitts durch die Anzeigeeinrichtung von Fig. 2; und
- Fig. 5: eine schematische Darstellung einer Querschnitts durch eine alternative Ausgestaltung der Anordnung von Fig. 2.

In den Figuren sind funktionsgleiche Elemente jeweils mit denselben Bezugszeichen versehen.

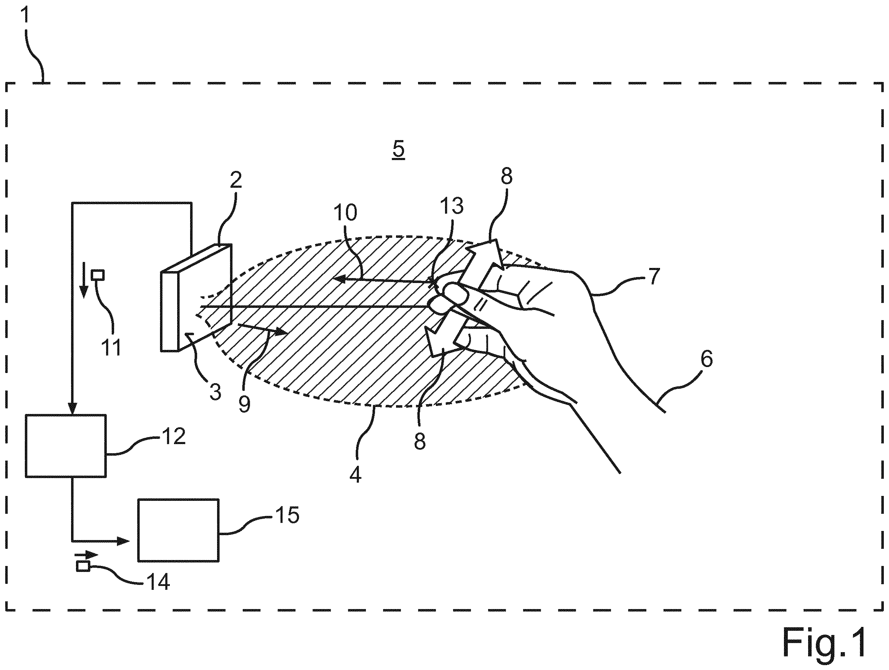

Fig. 1 zeigt ein Kraftfahrzeug 1, bei dem es sich beispielsweise um einen Kraftwagen, insbesondere einen Personenkraftwagen, handeln kann. Das Kraftfahrzeug 1 weist eine Radareinheit 2 auf. Die Radareinheit 2 ist als sogenannter Nano-Radar ausgestaltet. Eine Antenne 3 des Radars 2 kann beispielsweise als integrierte Schaltung oder als Patch-Antenne oder Patch-Array-Antenne mit einer Abmessung kleiner als 5 Zentimeter realisiert sein. Ein Erfassungsbereich 4 der Radareinheit 2 ist in einem Innenraum oder Fahrgastraum 5 des Kraftfahrzeugs 1 ausgerichtet. Eine in dem Fahrgastraum 5 befindliche Person 6 kann mit einem Körperteil 7, beispielsweise einer Hand, in den Erfassungsbereich 4 fassen und eine Bewegung 8 ausführen. Der Erfassungsbereich 4 ist durch ein Radarsignal 9 bestimmt, das mittels der Antenne 3 in den Fahrgastraum 5 ausgestrahlt wird. Eine Körperflüssigkeit in dem Körperteil 7, das heißt die Körperzellen oder Blutbahnen des Körperteils 7, reflektieren das Radarsignal 9, wodurch eine Reflexion 10 zur Antenne 3 zurückgeworfen wird. Die Radareinheit 2 kann die Reflexion 10 somit empfangen und in Abhängigkeit von der Reflexion 10 ein Reflexionssignal 11 erzeugen. Eine Steuereinrichtung 12 kann anhand des Reflexionssignals 11 eine Position 13 des Körperteils 7 im Erfassungsbereich 4 und/oder die Bewegung 8 erkennen. In Abhängigkeit von der erkannten Position 13 und/oder Bewegung 8 kann durch die Steuereinrichtung 12 ein Steuersignal 14 für eine Fahrzeugkomponente 15 erzeugt werden. Beispielsweise kann es sich bei der Fahrzeugkomponente 15 um ein Infotainmentsystem (Informations-Unterhaltungssystem) und/oder eine Klimatisierungseinrichtung des Kraftfahrzeugs 1 handeln. Die Steuereinrichtung 12 kann beispielsweise auf der Grundlage einer Prozessoreinrichtung, beispielsweise eines Mikroprozessors oder Mikrocontrollers, realisiert sein. Die Steuereinrichtung 12 kann hierzu beispielsweise durch ein Steuergerät realisiert sein.

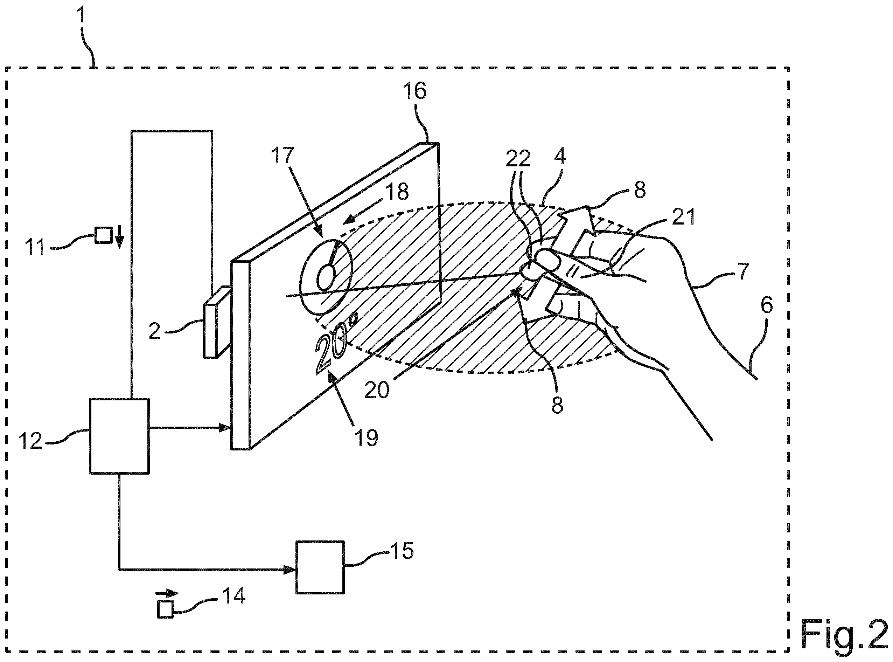

Fig. 2 veranschaulicht, wie in dem Kraftfahrzeug 1 die Radareinheit 2 und die Steuereinrichtung 12 dazu benutzt werden können, eine Bedieneinrichtung mit graphischer Benutzerschnittstelle zu realisieren. Hierzu ist eine Anzeigeeinrichtung 16 bereitgestellt, bei der es sich beispielsweise um einen TFT-Bildschirm oder OLED-Bildschirm handeln kann. Die Anzeigeeinrichtung 16 kann auch als Touchscreen ausgestaltet sein. Die Anzeigeeinrichtung 16 kann beispielsweise in einer Mittelkonsole oder einem Armaturenbrett des Kraftfahrzeugs 1 angeordnet sein. Beispielsweise durch die Steuereinrichtung 12 kann auf der Anzeigeeinrichtung 16 ein graphisches Bedienelement 17 erzeugt werden. In dem in Fig. 2 veranschaulichten Beispiel handelt es sich bei dem Bedienelement 17 um einen Drehsteller 18, dessen Stellwert 19 verstellt oder eingestellt wird, indem eine Drehlage des Drehstellers 18 verändert oder eingestellt wird. Bei dem Stellwert 19 kann es sich beispielsweise um eine Raumtemperatur für den Fahrgastraum 5 handeln. Entsprechend kann durch die Steuereinrichtung 12 in Abhängigkeit von dem aktuellen Stellwert 19 als Steuersignal 14 ein Sollwertsignal für eine Fahrzeugkomponente 15 erzeugt werden, durch welche das Raumklima im Fahrgastraum 5 eingestellt wird.

Um den Drehsteller 18 berührungslos zu bedienen, kann durch die Steuereinrichtung 12 anhand des Reflexionssignals 11 als Bewegung 8 eine Relativbewegung 20 eines ersten Fingers 21, beispielsweise des Daumens, bezüglich eines oder mehrerer anderer Finger 22, beispielsweise des Zeigefingers und des Mittelfingers, erkannt werden. Durch Versuchsmessungen wurde bei der Entwicklung oder Herstellung der Steuereinrichtung 12 ermittelt, welcher Zeitverlauf des Reflexionssignals 11 einer solchen Relativbewegung 20 entspricht. Hierdurch kann die Steuereinrichtung 12 die Relativbewegung 20 z.B. durch einen Mustervergleich wiedererkennen.

In Abhängigkeit von der Relativbewegung 20 wird durch die Steuereinrichtung 12 dann auf der Anzeigeeinrichtung 16 die Darstellung des Bedienelements 17 angepasst, das heißt der Stellwert 19 eingestellt oder verändert. Zusätzlich kann das Steuersignal 14 für die Fahrzeugkomponente 15 erzeugt werden.

Nach dem Einstellen möchte die Person 6 das Körperteil 7 wieder aus dem Erfassungsbereich 4 entfernen. Damit es hierbei nicht versehentlich zu einer Umstellung des Stellwerts 19 kommt, kann die Person 6 zunächst die Eingabe quittieren, um eine weitere Veränderung des Stellwerts 19 zu verhindern.

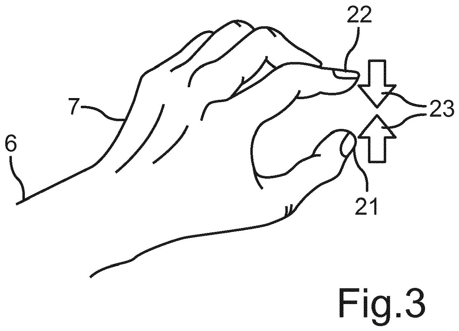

Fig. 3 zeigt hierzu eine Geste, die ebenfalls auf der Grundlage des Reflexionssignals 11 erkannt werden kann. Hierbei werden die Finger 21, 22 durch Zusammenführen 23 in Berührung gebracht. Dies symbolisiert ein Klicken mit einer Maustaste. Bei Erkennen des Zusammenführens 23 wird der Stellwert 19 blockiert, das heißt er bleibt unabhängig von weiteren Reflexionssignalen 11 unverändert. Die Person 6 kann nun das Körperteil 7 aus dem Erfassungsbereich 4 herausbewegen. Die Geste kann auch zum Bestätigen einer Menüauswahl vorgesehen sein.

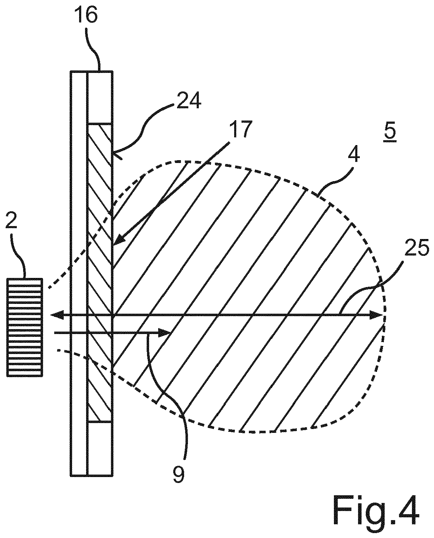

Fig. 4 veranschaulicht, wie die Radareinheit 2 das Radarsignal 9 durch eine Anzeigefläche 24 der Anzeigeeinrichtung 16 hindurch strahlen kann. Entsprechend durchdringt der Erfassungsbereich 4 die Anzeigefläche 24. Die Anzeigefläche 24 ist die Pixelfläche, das heißt derjenige Bereich, in welchem das graphische Bedienelement 17 und weitere graphische Bedienelemente als Pixelgraphik angezeigt werden können. Die Anzeigefläche 24 kann so eine graphische Benutzeroberfläche mit dem zu verstellenden Bedienelement 17 anzeigen. Sie ist beispielsweise durch die TFT-Matrix eines TFT-Bildschirms definiert. Anders als in Fig. 4 dargestellt, können auch mehrere Radareinheiten 2 als Sensoren hinter der Anzeigeeinrichtung 16 verbaut sein.

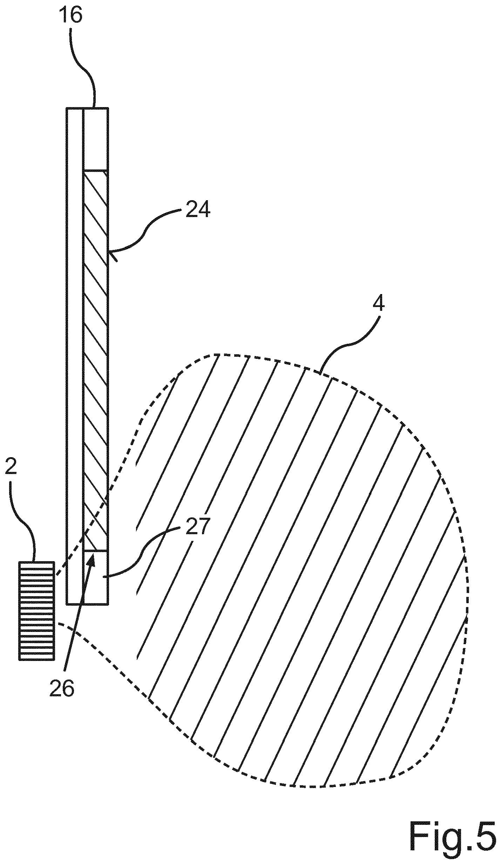

Fig. 5 zeigt eine alternative Anordnung, für den Fall, dass die Dämpfung des Radarsignals 9 und der Reflexion 10 hinter der Anzeigefläche 24 zu groß sein sollte, so dass eine Reichweite 25 des Erfassungsbereichs 4 in den Fahrgastraum 5 hinein zu klein sein sollte. Dies kann beispielsweise durch eine leitende ITO-Schicht der Anzeigefläche 24 verursacht sein (ITO - Indiumzinnoxid). In diesem Fall kann die Radareinheit 2 an einem Rand 26 des aktiven Bereichs, das heißt der Anzeigefläche 24 der Anzeigeeinrichtung 16 angebracht werden. Hierbei kann sie beispielsweise hinter einer Glasscheibe 27 angeordnet sein, welche auch die Anzeigefläche 24 bedeckt und/oder schützt. Damit ist eine Fingererkennung der Finger 21, 22 am Bildschirmrand 26 möglich.

Die Anzeigeeinrichtung kann auch ein Touchscreen (Berührungsbildschirm) sein. Die Anordnung aus Radareinheit 2 und Steuereinrichtung 12 stellt eine vorteilhafte Alternative oder Ergänzung zu einem Touchscreen dar. Über einen Touchscreen kann man per Berührung oder per Druck diverse Fahrzeug- oder Infotainment-Funktionen steuern. Häufig kommen dabei Slider (Schieberegler) oder gelegentlich auch Drehregler auf der graphischen Benutzeroberfläche des Touchscreens zum Einsatz. Dabei kann die jeweilige Funktion durch Darübergleiten mit dem Finger auf dem Touchscreen verstellt werden. Die Touchscreenoberfläche muss hierbei aber immer berührt werden. Drehsteller auf der graphischen Oberfläche lassen sich schwer bedienen, da der Finger in einer Kreisbahn über den Bildschirm geführt werden muss. Slider lassen sich schwer bedienen, da eine exakte Bewegung über die Touchoberfläche (berührungssensitive Oberfläche) mit ausgestrecktem Arm im Kraftfahrzeug ebenfalls schwierig ist.

Mittels einer Radareinheit 2 kann ein Bewegungs- und/oder Geschwindigkeitsmuster von einem Radar-reflektierenden Element erfasst werden. Bei einer Erfassung mit einer Reichweite 25 in einem Bereich von 15 bis 25 Zentimeter ist es möglich, hier auch ein Körperteil 7 zu erfassen, das keine metallischen Reflektoren aufweist. Hier ist die Körperflüssigkeit eines Körperteils ausreichend, um eine detektierbare Reflexion 10 zu erzeugen. Die Radareinheit kann hinter nicht-leitenden oder schwach-leitenden Materialien verbaut werden und mit dem Erfassungsbereich 4 in den Fahrgastraum 5 ausgerichtet sein. Somit lassen sich im Fahrgastraum 5 zum Beispiel Fingerbewegungsmuster erkennen, wie beispielsweise das beschriebene Reiben des Daumens am Zeigefinger. Eine solche Reibebewegung ist ähnlich dem Verstellen eines kleinen Drehrades, wie es beispielsweise bei einer mechanischen Uhr durchgeführt wird. Erkannt werden können auch andere Bewegungsmuster, wie das im Zusammenhang mit Fig. 3 beschriebene "Zusammen-Klicken" des Daumens und des Zeigefingers.

Bei dem Kraftfahrzeug 1 wird dies genutzt, um hinter einem Bildschirm eine oder mehrere Radareinheiten anzuordnen. Auf dem Bildschirm kann dann ein Drehsteller 18 für beliebige Funktionen, zum Beispiel Lautstärke, Balance, Klima-Temperatur, als Bedienelement in der graphischen Benutzeroberfläche angezeigt werden. An dieser Stelle befindet sich dann hinter dem Bildschirm die Radareinheit 2. Die Radareinheit 2 erkennt die Finger 21, 22 vor dem Bildschirm und die Bewegungsmuster der Finger. Die Person 6 kann mit der Hand 7 vor dem Bildschirm, auf dem dann beispielsweise der Drehsteller 18 angezeigt wird, durch die beschriebene Reibebewegung zwischen dem Daumen und dem Zeigefinger den Drehsteller verstellen.

Statt des Drehstellers kann auf die gleiche Art und Weise auch ein Slider oder ein anderes graphisches Bedienelement verstellt werden.

Weitere Funktionen, wie das Auswählen aus einem Bedienmenü oder aus einer Zahlengruppe, das Umschalten und Weiterblättern von Bedienmenüs können durch dieselbe oder eine oder mehrere weitere Bewegungsgesten ausgeführt werden. Hierbei kann auch beispielsweise die beschriebene Geste aus Fig. 3 (Zusammen-Klicken) genutzt werden.

Somit lassen sich durch die beschriebene Anordnung graphische Drehsteller und andere graphische Bedienelemente auf einem Bildschirm berührungslos verstellen. Dabei kann der Bildschirm zusätzlich auch als Touchscreen ausgestaltet sein, so dass eine Bedienung auch auf dem Bildschirm auf der Grundlage einer Berührung redundant erfolgen kann. Die beschriebenen Bewegungen haben sich als vorteilhaft erwiesen, da sie von Personen besonders intuitiv erfasst werden.

Insgesamt zeigt das Beispiel, wie durch die Erfindung ein virtueller Drehsteller vor einem Bildschirm realisiert werden kann.

## Patentansprüche

1. Kraftfahrzeug (1) mit zumindest einer Radareinheit (2) zum Abstrahlen eines Radarsignals (9) und zum Empfangen einer Reflexion (10) des abgestrahlten Radarsignals (9), wobei ein jeweiliger Erfassungsbereich (4) der zumindest einen Radareinheit (2) in einen Fahrgastraum (5) des Kraftfahrzeugs (1) ausgerichtet ist und eine Steuereinrichtung (12) dazu eingerichtet ist, anhand der von der zumindest einen Radareinheit (2) jeweils empfangenen Reflexion (10) in dem Fahrgastraum (5) eine Position (13) eines Körperteils (7) einer Person (6) und/oder eine Bewegung (8) des Körperteils (7) zu erfassen,
**dadurch gekennzeichnet, dass**
das Kraftfahrzeug (1) eine Anzeigeeinrichtung (16) zum Anzeigen eines graphischen Bedienelements (17) auf einer Anzeigefläche (24) aufweist und die Steuereinrichtung (12) dazu eingerichtet ist, einen von dem Bedienelement (17) angezeigten Stellwert (19) in Abhängigkeit von der erfassten Position (13) und/oder der erfassten Bewegung (8) einzustellen, wobei vom Fahrgastraum (5) aus gesehen von der zumindest einen Radareinheit (2) zumindest eine derart hinter der Anzeigefläche (24) angeordnet ist, dass diese Radareinheit (2) das Radarsignal (9) durch die Anzeigefläche (24) hindurch in den Fahrgastraum (5) abstrahlt und ihr Erfassungsbereich (4) die Anzeigefläche (24) durchdringt.

2. Kraftfahrzeug (1) nach Anspruch 1, wobei die zumindest eine Radareinheit (2) dazu eingerichtet ist, ihr Radarsignal (9) mit einem Frequenzverlauf und/oder einem Amplitudenverlauf zu erzeugen, durch welchen die Reflexion (10) durch eine Körperflüssigkeit des Körperteils (7) bewirkt wird.

3. Kraftfahrzeug (1) nach einem der vorhergehenden Ansprüche, wobei eine jeweilige Reichweite (25) der zumindest einen Radareinheit (2) kleiner als 50 Zentimeter, insbesondere kleiner als 30 Zentimeter, ist.

4. Kraftfahrzeug (1) nach einem der vorhergehenden Ansprüche, wobei die Bewegung (8) eine Relativbewegung (20) zumindest zweier Glieder (21, 22) des Körperteils (7), insbesondere zumindest zweier Finger (21, 22) einer Hand (7), umfasst und die Steuereinrichtung (12) dazu eingerichtet ist, den Stellwert (19) in Abhängigkeit von der Relativbewegung (20) einzustellen.

5. Kraftfahrzeug (1) nach Anspruch 4, wobei das Bedienelement (17) ein Drehsteller (18) ist und die Steuereinrichtung (12) dazu eingerichtet ist, als Relativbewegung (20) eine Reibbewegung zumindest zweier Finger (21, 22) zu erfassen.

6. Kraftfahrzeug (1) nach einem der vorhergehenden Ansprüche, wobei die Bewegung (8) ein Zusammenführen (23) und/oder Auseinanderbewegen zweier Finger (21, 22) umfasst und die Steuereinrichtung (12) dazu eingerichtet ist, bei Erkennen dieser Bewegung (23) den Stellwert (19) zu quittieren.

7. Kraftfahrzeug (1) nach einem der vorhergehenden Ansprüche, wobei vom Fahrgastraum (5) aus gesehen von der zumindest einen Radareinheit (2) zumindest eine derart neben der Anzeigefläche (24) angeordnet ist, dass ihr Erfassungsbereich (4) an der Anzeigefläche (24) vorbei ausgerichtet ist.

8. Kraftfahrzeug (1) nach einem der vorhergehenden Ansprüche, wobei zwischen der zumindest einen Radareinheit (2) und dem Fahrgastraum (5) ein Verkleidungsteil (27) aus Glas angeordnet ist.

## Claims

1. Motor vehicle (1) having at least one radar unit (2) to emit a radar signal (9) and to receive a reflection (10) of the emitted radar signal (9), wherein a respective detection region (4) of the at least one radar unit (2) is aligned in a passenger compartment (5) of the motor vehicle (1) and a control device (12) is configured to detect a position (13) of a body part (7) of a person (6) and/or a movement (8) of the body part (7) by means of the reflection (10) received by the at least one radar unit (2) respectively in the passenger compartment (5),
**characterised in that**
the motor vehicle (1) has a display device (16) to display a graphical operating element (17) on a display surface (24) and the control device (12) is configured to set a control value (19) displayed by the operating element (17) depending on the detected position (13) and/or the detected movement (8), wherein at least one of the at least one radar unit (2) is arranged behind the display surface (24) seen from the passenger compartment (5) in such a way that this radar unit (2) emits the radar signal (9) through the display surface (24) into the passenger compartment (5) and its detection region (4) penetrates the display surface (24).

2. Motor vehicle (1) according to claim 1, wherein the at least one radar unit (2) is configured to generate its radar signal (9) having a frequency profile and/or an amplitude profile, using which the reflection (10) is effected through a bodily fluid of the body part (7).

3. Motor vehicle (1) according to any one of the preceding claims, wherein a respective range (25) of the at least one radar unit (2) is smaller than 50 centimetres, in particular smaller than 30 centimetres.

4. Motor vehicle (1) according to any one of the preceding claims, wherein the movement (8) comprises a relative movement (20) of at least two appendages (21, 22) of the body part (7), in particular of at least two fingers (21, 22) of a hand (7), and the control device (12) is configured to set the control value (19) depending on the relative movement (20).

5. Motor vehicle (1) according to claim 4, wherein the operating element (17) is a rotary adjuster (18) and the control device (12) is configured to detect a frictional movement of at least two fingers (21, 22) as a relative movement (20).

6. Motor vehicle (1) according to any one of the preceding claims, wherein the movement (8) comprises a bringing together (23) and/or movement apart of two fingers (21, 22) and the control device (12) is configured to confirm the control value (19) on recognition of this movement (23).

7. Motor vehicle (1) according to any one of the preceding claims, wherein at least one of the at least one radar unit (2) is arranged next to the display surface (24) seen from the passenger compartment (5) in such a way that its detection region (4) is aligned to the display surface (24).

8. Motor vehicle (1) according to any one of the preceding claims, wherein a casing part (27) made from glass is arranged between the at least one radar unit (2) and the passenger compartment (5).

## Revendications

1. Véhicule automobile (1) avec au moins une unité de radar (2) pour le rayonnement d'un signal radar (9) et pour la réception d'une réflexion (10) du signal radar (9) irradié, dans lequel une zone de détection (4) respective de l'au moins une unité de radar (2) est orientée dans un habitacle (5) du véhicule automobile (1) et un dispositif de commande (12) est aménagé afin de détecter au moyen de la réflexion (10) reçue respectivement par l'au moins une unité de radar (2) dans l'habitacle (5) une position (13) d'une partie de corps (7) d'une personne (6) et/ou un mouvement (8) de la partie de corps (7),
**caractérisé en ce que**
le véhicule automobile (1) présente un dispositif d'affichage (16) pour l'affichage d'un élément de commande graphique (17) sur une surface d'affichage (24) et le dispositif de commande (12) est aménagé afin de régler une valeur de réglage (19) affichée par l'élément de commande (17) en fonction de la position (13) détectée et/ou du mouvement (8) détecté, dans lequel vu depuis l'habitacle (5) parmi l'au moins une unité de radar (2) au moins une est agencée derrière la surface d'affichage (24) de telle manière que cette unité de radar (2) irradie le signal de radar (9) au travers de la surface d'affichage (24) dans l'habitacle (5) et sa zone de détection (4) traverse la surface d'affichage (24).

2. Véhicule automobile (1) selon la revendication 1, dans lequel l'au moins une unité de radar (2) est aménagée afin de générer son signal radar (9) avec une courbe de fréquence et/ou une courbe d'amplitude par laquelle la réflexion (10) est provoquée par un liquide corporel de la partie de corps (7).

3. Véhicule automobile (1) selon l'une quelconque des revendications précédentes, dans lequel une portée respective (25) d'au moins une unité de radar (2) est inférieure à 50 centimètres, en particulier inférieure à 30 centimètres.

4. Véhicule automobile (1) selon l'une quelconque des revendications précédentes, dans lequel le mouvement (8) comprend un mouvement relatif (20) d'au moins deux organes (21, 22) de la partie de corps (7), en particulier au moins de deux doigts (21, 22) d'une main (7) et le dispositif de commande (12) est aménagé afin de régler la valeur de réglage (19) en fonction du mouvement relatif (20).

5. Véhicule automobile (1) selon la revendication 4, dans lequel l'élément de commande (17) est un élément de réglage rotatif (18) et le dispositif de commande (12) est aménagé afin de détecter en tant que mouvement relatif (20) un mouvement de frottement au moins de deux doigts (21 22).

6. Véhicule automobile (1) selon l'une quelconque des revendications précédentes, dans lequel le mouvement (8) comprend une réunion (23) et/ou un éloignement de deux doigts (21, 22) et le dispositif de commande (12) est aménagé afin de confirmer lors de la reconnaissance de ce mouvement (23) la valeur de réglage (19).

7. Véhicule automobile (1) selon l'une quelconque des revendications précédentes, dans lequel vu depuis l'habitacle (5) parmi l'au moins une unité de radar (2) au moins une est agencée à côté de la surface d'affichage (24) de telle manière que sa zone de détection (4) soit orientée devant la surface d'affichage (24).

8. Véhicule automobile (1) selon l'une quelconque des revendications précédentes, dans lequel une partie de revêtement (27) en verre est agencée entre l'au moins une unité de radar (2) et l'habitacle (5).
